# EUROPÄISCHE PATENTSCHRIFT

(11) **EP 3 688 295 B1**
(45) Veröffentlichungstag und Bekanntmachung des Hinweises auf die Patenterteilung: **21.04.2021**
(21) Anmeldenummer: 18773401.7
(22) Anmeldetag: 17.09.2018
(51) Int. Cl.: F02D 41/00, F02P 5/04, F02P 5/15, F02D 37/02, F02D 41/02

(54) **VERFAHREN ZUM BETREIBEN EINER ANTRIEBSEINRICHTUNG SOWIE ENTSPRECHENDE ANTRIEBSEINRICHTUNG**
METHOD FOR OPERATING A DRIVE DEVICE AND CORRESPONDING DRIVE DEVICE
PROCÉDÉ PERMETTANT DE FAIRE FONCTIONNER UN DISPOSITIF D'ENTRAÎNEMENT ET DISPOSITIF D'ENTRAÎNEMENT CORRESPONDANT

(30) Priorität: 25.09.2017 DE 102017216978
(43) Veröffentlichungstag der Anmeldung: 05.08.2020
(73) Patentinhaber: Audi AG, 85045 Ingolstadt (DE)
(72) Erfinder: BARRA, Bernd, 80797 München (DE); REIKER, Jan, 80639 München (DE)
(86) Internationale Anmeldenummer: PCT/EP2018/075068
(87) Internationale Veröffentlichungsnummer: WO 2019/057663

(56) Entgegenhaltungen:
- WO-A1-2014/087067
- DE-A1- 10 322 963
- US-A1- 2005 197 759
- US-A1- 2009 118 977
- US-A1- 2016 115 878

## Beschreibung

Die Erfindung betrifft ein Verfahren zum Betreiben einer Antriebseinrichtung, die eine Brennkraftmaschine mit mehreren Zylindern aufweist, wobei zur Reduzierung eines von der Brennkraftmaschine bereitgestellten Antriebsdrehmoments ein an der Brennkraftmaschine eingestellter Zündzeitpunkt ausgehend von einem Ausgangszündzeitpunkt nach spät verstellt wird, bis der Zündzeitpunkt einem Schwellenzündzeitpunkt entspricht, und zur weiteren Reduzierung des Antriebsdrehmoments wenigstens ein abzuschaltender Zylinder der mehreren Zylinder durch Aussetzung einer Kraftstoffeinspritzung in den Zylinder abgeschaltet wird und der oder die verbleibenden Zylinder weiterhin mit Kraftstoffeinspritzung unter Verwendung des Zündzeitpunkts betrieben wird/werden, wobei den verbleibenden, weiterbetriebenen Zylindern der Brennkraftmaschine eine im Vergleich zu einer vor der Zylinderabschaltung vorliegenden Ausgangskraftstoffmenge größere Kraftstoffmenge zum Einstellen eines unterstöchiometrischen Kraftstoff-Sauerstoff Verhältnisses zugeführt wird. Die Erfindung betrifft weiterhin eine Antriebseinrichtung.

Die Antriebseinrichtung dient beispielsweise dem Antreiben eines Kraftfahrzeugs, insoweit also dem Bereitstellen eines auf das Antreiben des Kraftfahrzeugs gerichteten Antriebsdrehmoments. Das Antriebsdrehmoment wird zumindest zeitweise und/oder zumindest teilweise von der Brennkraftmaschine bereitgestellt, welche Bestandteil der Antriebseinrichtung ist.

Von Zeit zu Zeit kann es notwendig sein, das von der Brennkraftmaschine bereitgestellte Antriebsdrehmoment zu reduzieren. Um eine vernünftige und perfomante Systemantwort der Antriebseinrichtung zu erzielen, ist es sinnvoll, einen möglichst großen Anteil des Antriebsdrehmoments durch ein Verstellen des Zündzeitpunkts zu erzielen, einen möglichst geringen Anteil hingegen durch Drosselung der Brennkraftmaschine. Dies gilt insbesondere, falls die Brennkraftmaschine turboaufgeladen ist, also einen Turbolader aufweist, welchem von der Brennkraftmaschine erzeugtes Abgas zugeführt wird und der die in dem Abgas enthaltene Enthalpie oder Strömungsenergie heranzieht, um der Brennkraftmaschine zuzuführendes Frischgas zu verdichten.

Zur Reduzierung des Antriebsdrehmoments soll nun zunächst der an der Brennkraftmaschine eingestellte Zündzeitpunkt ausgehend von dem vor der Reduzierung des Antriebsdrehmoments vorliegenden Ausgangszündzeitpunkt nach spät verstellt werden. Dies wird durchgeführt, bis der Zündzeitpunkt gleich dem Schwellenzündzeitpunkt ist, welcher beispielsweise einem spätestmöglichen Zündzeitpunkt der Brennkraftmaschine entspricht. Bis hin zu dem spätestmöglichen Zündzeitpunkt ist ein ordnungsgemäßer Betrieb der Brennkraftmaschine, insbesondere bei üblichen Umgebungsbedingungen, möglich. Hat der Zündzeitpunkt den Schwellenzündzeitpunkt erreicht, also beispielsweise den spätestmöglichen Zündzeitpunkt, kann das Antriebsdrehmoment der Brennkraftmaschine nicht weiter durch Verstellen des Zündzeitpunkts reduziert werden.

Es ist daher vorgesehen, eine Zylinderabschaltung vorzunehmen, in dessen Rahmen der abzuschaltende Zylinder abgeschaltet wird. Dies erfolgt durch Aussetzen der Kraftstoffeinspritzung. In anderen Worten wird während der Zylinderabschaltung in den Zylinder kein Kraftstoff eingespritzt. Der verbleibende Zylinder oder die verbleibenden Zylinder hingegen werden weiterhin mit Kraftstoff versorgt, die Kraftstoffeinspritzung wird also weiterhin durchgeführt. Auch wird in dem oder den verbleibenden Zylindern weiterhin eine Zündung vorgenommen, nämlich zum Zündzeitpunkt, welcher dem Schwellenzündzeitpunkt entsprechen kann. Vorzugsweise wird jedoch der Zündzeitpunkt während der Zylinderabschaltung in Abhängigkeit von wenigstens einem Betriebsparameter der Brennkraftmaschine ermittelt. Als Betriebsparameter wird beispielsweise ein von der Brennkraftmaschine angefordertes Drehmoment, eine Zylinderfüllung und/oder die Anzahl der abgeschalteten Zylinder und/oder die Anzahl der verbleibenden Zylinder verwendet.

Aus dem Stand der Technik ist beispielsweise die Druckschrift DE 10 2004 031 296 A1 bekannt. Diese betrifft ein Verfahren zum Betreiben einer Brennkraftmaschine. Bei der Brennkraftmaschine sind zum Betreiben der Brennkraftmaschine Betriebsparameter gegeben, welche im Bereich eines stationären Zustands gültig sind. Die Größen eines ersten Teils der Betriebsparameter sind dabei bekannt, die Größen eines zweiten Teils der Betriebsparameter werden aufgrund eines Modells derart ermittelt, dass die Brennkraftmaschine ein Solldrehmoment erzeugt. Sobald im Betrieb der Brennkraftmaschine ein instationärer Zustand auftritt, wird vom modellbasierten auf ein zündsynchrones Ermitteln der Größen von Betriebsparametern übergegangen.

Die Druckschrift DE 103 22 963 A1 beschreibt ein Verfahren zur Steuerung des Betriebs eines mit einem Abgasreinigungskatalysator verbundenen Motors. Unter vorbestimmten Bedingungen betreibt das Verfahren einen Motor in der Weise, dass eine erste Zylindergruppe ein mageres Luft- /Kraftstoffgemisch verbrennt, und eine zweite Zylindergruppe lediglich Luft pumpt. Des Weiteren liefert das Verfahren zur Steuerung eines Motors auch die folgenden Merkmale in Kombination mit der oben beschriebenen gesplitteten Luft-/Magerbetriebsart: Leerlaufdrehzahlregelung, Sensordiagnosen, Luft-/Kraftstoffverhältnis-Regelung, adaptives Lernen, Kraftstoffdampfspülung, Schätzung der Katalysatortemperatur, Notbetrieb und Regelung der Temperatur des Abgases und der Abgasreinigungsvorrichtung. Zusätzlich geht das Verfahren zur Steuerung eines Motors bei vorgewählten Betriebsbedingungen, wie zum Beispiel Kraftstoffdampfspülung, Regelung des Krümmerunterdrucks und Spülung von in einer Abgasreinigungsvorrichtung abgelagerten Oxidantien, auch zur Verbrennung in allen Zylindern über.

Es ist Aufgabe der Erfindung, ein Verfahren zum Betreiben einer Antriebseinrichtung vorzuschlagen, welches gegenüber bekannten Verfahren Vorteile aufweist, insbesondere auch bei einem Abschalten der abzuschaltenden Zylinder sowie während der Zylinderabschaltung für eine Reduzierung der Schadstoffemissionen der Brennkraftmaschine sorgt.

Dies wird erfindungsgemäß mit einem Verfahren zum Betreiben einer Antriebseinrichtung mit den Merkmalen des Anspruchs 1 erreicht. Dabei ist vorgesehen, dass das Abgas der Brennkraftmaschine einer Abgasreinigungseinrichtung zugeführt wird, und dass eine Temperatur in der Abgasreinigungseinrichtung ermittelt wird, wobei bei Überschreiten eines Grenzwerts durch die Temperatur die Kraftstoffmenge in Richtung der Ausgangskraftstoffmenge verringert und/oder eine der Brennkraftmaschine zugeführte Frischgasmenge vergrößert und/oder der Zündzeitpunkt ausgehend von dem Schwellenzeitpunkt nach früh verstellt und/oder ein weiterer Zylinder abgeschaltet wird, und wobei wenigstens eine dieser Maßnahmen durchgeführt wird, bis die Temperatur in der Abgasreinigungseinrichtung dem Grenzwert entspricht oder kleiner ist als dieser.

Grundsätzlich ist vorgesehen, dass den verbleibenden, weiterbetriebenen Zylindern der Brennkraftmaschine eine im Vergleich zu einer vor der Zylinderabschaltung vorliegenden Ausgangskraftstoffmenge größere Kraftstoffmenge zum Einstellen eines unterstöchiometrischen Kraftstoff-Sauerstoff-Verhältnisses zugeführt wird.

Bei der Zylinderabschaltung werden die abzuschaltenden Zylinder durch Aussetzung der Kraftstoffeinspritzung abgeschaltet. Gleichzeitig werden die verbleibenden Zylinder beziehungsweise die weiterbetriebenen Zylinder mit Kraftstoff versorgt. Bei gleichem Betriebspunkt, also bei ansonsten unveränderten Betriebsbedingungen der Brennkraftmaschine, würde durch die Zylinderabschaltung die der Brennkraftmaschine beziehungsweise den Zylindern zugeführte Kraftstoffmenge im Vergleich zu der der Brennkraftmaschine beziehungsweise den Zylindern zugeführten Sauerstoffmenge stark abfallen, sodass zwar in den weiterbetriebenen Zylindern weiterhin dasselbe Kraftstoff-Sauerstoff-Verhältnis wie vor der Zylinderabschaltung vorliegt, das zusammengefasste Abgas aller Zylinder der Brennkraftmaschine jedoch mager ist, also Sauerstoffüberschuss im Vergleich zum stöchiometrischen Verhältnis zwischen Kraftstoffmenge und Sauerstoffmenge aufweist.

Dies führt dazu, dass eine der Brennkraftmaschine nachgelagerte Abgasreinigungseinrichtung, insbesondere ein Katalysator, besonders bevorzugt ein Dreiwegekatalysator, die in dem Abgas der Brennkraftmaschine enthaltenen Schadstoffe nicht vollständig konvertieren kann. Aufgrund des Sauerstoff-überschusses in dem Abgas würde die Konvertierungsleistung der Abgasreinigungseinrichtung insbesondere für Stickoxide drastisch abfallen. Um dies zu vermeiden, soll das Kraftstoff-Sauerstoff-Verhältnis durch Zuführen der größeren Kraftstoffmenge auf das unterstöchiometrische Kraftstoff-Sauerstoff-Verhältnis eingestellt werden.

Das bedeutet, dass in dem von der Brennkraftmaschine während der Zylinderabschaltung erzeugten Abgas insgesamt stets Sauerstoffmangel vorliegt. Durch diese Maßnahme werden die von der Brennkraftmaschine erzeugten Stickoxidrohemissionen verringert, weil durch das Anfetten des Gemischs die Temperatur verringert wird. Ein Großteil der Stickoxidrohemissionen ist auf den sogenannten Zeldovich-Mechanismus zurückzuführen, der den exponentiellen Zusammenhang von Temperatur und der Entstehung von thermischen Stickoxiden beschreibt. Eine Reduzierung der Temperatur in den weiterbetriebenen Zylindern, welche durch das Anfetten des Gemischs realisiert wird, hat somit einen starken Einfluss auf die Stickoxidrohemissionen. Auch wird durch die unterstöchiometrische Verbrennung ein deutlich geringerer Restsauerstoffgehalt hinter der Flammenfront dargestellt, sodass deutlich weniger Edukte für die Stickoxidrohemissionen vorhanden sind. Durch die gleichzeitig geringere Temperatur reagiert der geringere Sauerstoffanteil aufgrund des genannten Zeldovich-Mechanismus noch weniger zu Stickoxid.

Weiterhin wird in dem insgesamt von der Brennkraftmaschine erzeugten Abgas Sauerstoffmangel hergestellt, sodass die Abgasreinigungseinrichtung auch die Stickoxide effektiv umwandeln beziehungsweise reduzieren kann. Die im Vergleich zu der Ausgangskraftmenge größere Kraftstoffmenge soll insbesondere bei gleichem Betriebspunkt vorliegen, also bei gleichem Antriebsdrehmoment und/oder gleicher Drehzahl der Brennkraftmaschine. Verändert sich während der Zylinderabschaltung der Betriebspunkt, beispielsweise durch eine Änderung des Antriebsdrehmoments und/oder der Drehzahl, so können sich selbstredend Abweichungen ergeben. Beispielsweise entspricht dann die Ausgangskraftstoffmenge einer ohne Zylinderabschaltung theoretisch vorliegenden Kraftstoffmenge.

Insoweit im Rahmen dieser Beschreibung von den abgeschalteten Zylindern im Plural die Rede ist, so kann hierunter stets auch lediglich ein einziger abgeschalteter Zylinder verstanden werden. Umgekehrt gilt für die verbleibenden, weiterbetriebenen Zylinder, dass auch lediglich ein einziger weiterbetriebener Zylinder vorliegen kann. Zur sprachlichen Straffung wird in beiden Fällen der Plural verwendet.

Im Rahmen einer weiteren Ausgestaltung der Erfindung ist vorgesehen, dass den weiterbetriebenen Zylindern eine bezüglich einer vor der Zylinderabschaltung vorliegenden Ausgangssauerstoffmenge gleichbleibende Sauerstoffmenge zugeführt wird. Auch dies gilt bevorzugt bei gleichem Betriebspunkt. Sofern sich der Betriebspunkt während der Zylinderabschaltung verändert, so können sich auch hier Änderungen ergeben. Die Ausgangssauerstoffmenge entspricht in diesem Fall beispielsweise einer theoretischen Sauerstoffmenge, welche ohne die Zylinderabschaltung der Brennkraftmaschine zugeführt werden würde. Bei gleichem Betriebspunkt bleibt jedoch trotz der Zylinderabschaltung die den weiterbetriebenen Zylindern zugeführte Sauerstoffmenge gleich. Besonders bevorzugt gilt dies für alle Zylinder, sodass nicht nur den weiterbetriebenen Zylindern, sondern auch den abgeschalteten Zylindern jeweils dieselbe Sauerstoffmenge zugeführt wird wie vor der Zylinderabschaltung.

Eine Weiterbildung der Erfindung sieht vor, dass während der Zylinderabschaltung Frischgas durch die abgeschalteten Zylinder gefördert und als Abgas abgeführt wird. Unter Frischgas ist ein Gemisch aus Frischluft und Abgas in beliebigen Anteilen zu verstehen. Das Frischgas kann beispielsweise nur aus Frischluft bestehen oder - im Falle einer Abgasrückführung - einen Anteil Abgas aufweisen. Die Frischluft enthält wiederum einen Anteil an Sauerstoff. Während der Zylinderabschaltung soll für den abgeschalteten Zylinder lediglich die Kraftstoffeinspritzung abgeschaltet werden. Weitere Betriebsparameter der abgeschalteten Zylinder bleiben vorzugsweise gleich, insbesondere Öffnungszeitpunkte und/oder Schließzeitpunkte von Einlassventilen und/oder Auslassventilen der abgeschalteten Zylinder.

Die abgeschalteten Zylinder dienen insoweit der Förderung von Frischgas durch sie hindurch. Entsprechend wird das Frischgas als Abgas aus den Zylindern abgeführt. Das Abgas der abgeschalteten Zylinder entspricht dabei dem Frischgas, welches in chemisch unveränderter Form vorliegt, also während seines Förderns durch die abgeschalteten Zylinder keiner chemischen Reaktion unterzogen wird, insbesondere nicht zur Verbrennung von Kraftstoff herangezogen wird.

Eine weitere Ausführungsform der Erfindung sieht vor, dass Abgas der weiterbetriebenen Zylinder und der abgeschalteten Zylinder stromabwärts von Auslassventilen zusammengeführt wird, und dass die Kraftstoffmenge während der Zylinderabschaltung derart gewählt wird, dass das Abgas eine stöchiometrische Zusammensetzung aufweist, oder einer Maximal kraftstoffmenge entspricht. Unter der stöchiometrischen Zusammensetzung des Abgases ist eine Zusammensetzung zu verstehen, die der Zusammensetzung bei einem stöchiometrischen Betrieb der Brennkraftmaschine unter Verwendung aller Zylinder entspricht. Während der Zylinderabschaltung soll also in den weiterbetriebenen Zylindern das unterstöchiometrische Kraftstoff-Sauerstoff-Verhältnis vorliegen, sodass nach der in den Zylindern ablaufenden Verbrennung auch in dem daraus resultierenden Abgas Sauerstoffmangel vorliegt. Durch die abgeschalteten Zylinder wird hingegen das Frischgas und entsprechend der darin enthaltene Sauerstoff chemisch unverändert hindurchgeführt.

Das von der Brennkraftmaschine insgesamt erzeugte Abgas weist also bei zeitlich aufgelöster Betrachtung in Abhängigkeit von der jeweiligen Zündreihenfolge der Zylinder der Brennkraftmaschine abwechselnd Sauerstoffmangel und Sauerstoffüberschuss auf. Bei zeitlich gemittelter Betrachtung soll sich jedoch die stöchiometrische Zusammensetzung einstellen. Hierzu wird die den weiterbetriebenen Zylindern zugeführte Kraftstoffmenge entsprechend angepasst, also auch die durch die abgeschalteten Zylinder hindurchgeführte beziehungsweise hindurchgeführte Sauerstoffmenge berücksichtigt. Durch das Einstellen der stöchiometrischen Zusammensetzung wird sichergestellt, dass die vorstehend bereits erwähnte Abgasreinigungseinrichtung nicht nur Stickoxide, sondern auch Kohlenstoffoxid und/oder Kohlenwasserstoffe mit hohen Konvertierungsraten umsetzen kann.

Falls die stöchiometrische Zusammensetzung des Abgases, insbesondere die zeitlich gemittelte stöchiometrische Zusammensetzung, nicht erreichbar ist, beispielsweise bei hohen Ausblendgraden, so sollen die weiterbetriebenen Zylinder dennoch unterstöchiometrisch betrieben werden. Das Erreichen der stöchiometrischen Zusammensetzung kann beispielsweise durch eine zu kleine Maximalkraftstoffmenge für die weiterbetriebenen Zylindern verhindert werden. Unter der Maximalkraftstoffmenge ist diejenige maximale Kraftstoffmenge zu verstehen, bei welcher ein zuverlässiger Betrieb der Brennkraftmaschine noch möglich ist, insbesondere eine hinreichende Brennstabilität gegeben ist und/oder die Temperatur der Abgasreinigungseinrichtung einen Grenzwert nicht überschreitet. Durch die unterstöchiometrische Zusammensetzung in den weiterbetriebenen Zylinder und der zeitlich gemittelten überstöchiometrischen Zusammensetzung werden die Stickoxidrohemissionen in den weiterbetriebenen Zylindern minimiert und durch die zeitlich aufgelösten unterstöchiometrischen Abgasstränge der weiterbetriebenen Zylinder zumindest eine Teilkonvertierung in der Abgasreinigungseinrichtung erreicht.

Die Erfindung sieht vor, dass das Abgas der Brennkraftmaschine einer Abgasreinigungseinrichtung zugeführt wird, und dass eine Temperatur der Abgasreinigungseinrichtung ermittelt wird, wobei bei Überschreiten eines Grenzwerts durch die Temperatur die Kraftstoffmenge in Richtung der Ausgangskraftstoffmenge verringert und/oder eine der Brennkraftmaschine zugeführte Frischgasmenge vergrößert und/oder der Zündzeitpunkt ausgehend von dem Schwellenzündzeitpunkt nach früh verstellt und/oder ein weiterer Zylinder abgeschaltet wird. Durch das Verstellen des Zündzeitpunkts der Brennkraftmaschine nach spät erhöht sich die Temperatur des Abgases, sodass auch die Abgasreinigungseinrichtung mit hohen Temperaturen beaufschlagt wird.

Um temperaturbedingte Beeinträchtigungen der Abgasreinigungseinrichtungen zu vermeiden, soll nun die Temperatur in der Abgasreinigungseinrichtung ermittelt werden, beispielsweise durch Messen und/oder durch Abschätzen. In ersterem Fall kann in der Abgasreinigungseinrichtung ein Temperatursensor angeordnet sein, mittels welchem die Temperatur des Abgases in der Abgasreinigungseinrichtung und/oder der Abgasreinigungseinrichtung selbst ermittelt wird. Alternativ kann selbstverständlich die Temperatur abgeschätzt werden, beispielsweise mithilfe eines Temperaturmodells.

Überschreitet nun die auf diese Art und Weise ermittelte Temperatur den Grenzwert, so sollen Maßnahmen getroffen werden, um die Temperatur in der Abgasreinigungseinrichtung zu verringern. Hierzu wird beispielsweise die Kraftstoffmenge, die den weiterbetriebenen Zylindern zugeführt wird, verringert. Alternativ oder zusätzlich kann es vorgesehen sein, die der Brennkraftmaschine zugeführte Frischgasmenge zu vergrößern und/oder den Zündzeitpunkt wieder in Richtung früh zu verstellen und/oder einen weiteren Zylinder abzuschalten. Es wird wenigstens eine dieser Maßnahmen durchgeführt, bis die Temperatur in der Abgasreinigungseinrichtung dem Grenzwert entspricht oder kleiner ist als dieser. Falls alle Zylinder der Brennkraftmaschine betrieben werden, kann die Kraftstoffmenge erhöht werden, um die Temperatur zu verringern.

Eine bevorzugte Weiterbildung der Erfindung sieht vor, dass der Brennkraftmaschine in einem Anfettungszeitraum die größere Kraftstoffmenge zugeführt wird, wobei der Anfettungszeitraum vor der Zylinderabschaltung beginnt und/oder nach der Zylinderabschaltung endet. Unter dem Anfettungszeitraum ist derjenige Zeitraum zu verstehen, während welchem der Brennkraftmaschine eine Kraftstoffmenge zugeführt wird, welche derart bemessen ist, dass in den Zylindern der Brennkraftmaschine das unterstöchiometrische Kraftstoff-Sauerstoff-Verhältnis realisiert ist, also Luftmangel vorliegt. Außerhalb der Zylinderabschaltung wird diese größere Kraftstoffmenge bevorzugt allen Zylindern der Brennkraftmaschine zugeführt, also sowohl den während der Zylinderabschaltung abgeschalteten Zylindern als auch den weiterbetriebenen Zylindern.

Der Anfettungszeitraum beginnt vorzugsweise bereits vor der Zylinderabschaltung. Alternativ oder zusätzlich endet er erst nach der Zylinderabschaltung. Es ist also vorgesehen, zunächst der Brennkraftmaschine die größere Kraftstoffmenge zuzuführen und erst anschließend die abzuschaltenden Zylinder abzuschalten. Analog kann es vorgesehen sein, die abgeschalteten Zylinder wieder hinzuzuschalten und erst anschließend den Anfettungszeitraum zu beenden. Bei dem Beginn des Anfettungszeitraums vor der Zylinderabschaltung kann beispielsweise die Abgasreinigungseinrichtung bereits auf die Zylinderabschaltung vorbereitet und entsprechend konditioniert werden. Erstreckt sich der Anfettungszeitraum über die Zylinderabschaltung hinaus, so wird in der Abgasreinigungseinrichtung zwischengespeicherter Sauerstoff aus dieser ausgetrieben.

Eine weitere bevorzugte Ausführungsform der Erfindung sieht vor, dass der Anfettungszeitraum eingeleitet wird, wenn anhand wenigstens eines Betriebsparameters der Antriebseinrichtung eine Drehmomentänderung prognostiziert wird. Eingangs wurde bereits erläutert, dass die Zylinderabschaltung durchgeführt wird, wenn das Antriebsdrehmoment der Brennkraftmaschine reduziert werden soll. Bei einer solchen Drehmomentänderung ist es insoweit sinnvoll, bereits die vorstehend erwähnte Konditionierung der Abgasreinigungseinrichtung vorzunehmen. Entsprechend soll der Anfettungszeitraum bereits beginnen, wenn die Drehmomentänderung mit einer gewissen Wahrscheinlichkeit in der Zukunft auftreten wird.

Eine Weiterbildung der Erfindung sieht vor, dass die Drehmomentänderung prognostiziert wird, wenn der Betriebspunkt sich einem Getriebeschaltpunkt nähert und/oder ein Reifenschlupf sich einer Schlupfgrenze nähert. Unter dem Getriebeschaltpunkt ist ein Betriebspunkt zu verstehen, in welchem ein Gangwechsel eines an die Brennkraftmaschine angeschlossenen Mehrganggetriebes auftritt. Im Rahmen eines Gangwechsels dieses Mehrganggetriebes ändert sich häufig das Drehmoment, welches von der Brennkraftmaschine angefordert wird und entsprechend auch das von dieser bereitgestellte Antriebsdrehmoment. Besonders bevorzugt wird die Drehmomentänderung prognostiziert, wenn sich der Betriebspunkt dem Getriebeschaltpunkt annähert, sich also in dessen Richtung verändert, und gleichzeitig der erwartete Gangwechsel eine Verringerung des Antriebsdrehmoments nach sich ziehen wird.

Zusätzlich oder alternativ kann die Drehmomentänderung prognostiziert werden, wenn sich der Reifenschlupf der Schlupfgrenze nähert. Der Reifenschlupf ist der tatsächlich an den Reifen des Kraftfahrzeugs auftretende Schlupf. Sobald dieser Reifenschlupf innerhalb eines bestimmten Bereichs um die Schlupfgrenze herum liegt und sich weiter in dessen Richtung verändert, ist eine Verringerung des Antriebsdrehmoments zu erwarten, welche beispielsweise von einer Fahrerassistenzeinrichtung des Kraftfahrzeugs eingeleitet wird.

Schließlich kann im Rahmen einer besonders bevorzugten Ausführungsform der Erfindung vorgesehen sein, dass der Anfettungszeitraum nach einem Beenden der Zylinderabschaltung beendet wird, sobald ein Sauerstofffüllstand eines Sauerstoffspeichers der Abgasreinigungseinrichtung einen Sollfüllstand erreicht hat. Aufgrund der Zylinderabschaltung und dem Hindurchführen von Frischgas durch die abgeschalteten Zylinder füllt sich der Sauerstoffspeicher der Abgasreinigungseinrichtung während der Zylinderabschaltung oder verändert sich zumindest. Um den Sauerstofffüllstand nach der Zylinderabschaltung wieder auf seinen Sollfüllstand zu bringen, wird der Anfettungszeitraum über die Zylinderabschaltung hinaus erstreckt.

Sobald das gewünschte Ziel erreicht ist, nämlich der Sauerstofffüllstand dem Sollfüllstand entspricht, wird der Anfettungszeitraum beendet und die Brennkraftmaschine wieder mit der Ausgangskraftstoffmenge beziehungsweise einem außerhalb der Zylinderabschaltung verwendeten Kraftstoff-Sauerstoff-Verhältnisses betrieben, nämlich insbesondere einem stöchiometrischen Kraftstoff-Sauerstoff-Verhältnis.

Die Erfindung betrifft weiterhin eine Antriebseinrichtung, insbesondere zur Durchführung des Verfahrens gemäß den vorstehenden Ausführungen, die eine Brennkraftmaschine mit mehreren Zylindern aufweist und dazu ausgebildet ist, zur Reduzierung eines von der Brennkraftmaschine bereitgestellten Antriebsdrehmoments einen an der Brennkraftmaschine eingestellten Zündzeitpunkt ausgehend von einem Ausgangszündzeitpunkt nach spät zu verstellen, bis der Zündzeitpunkt einem Schwellenzündzeitpunkt entspricht, und zur weiteren Reduzierung des Antriebsdrehmoments wenigstens einen abzuschaltenden Zylinder der mehreren Zylinder durch Aussetzung einer Kraftstoffeinspritzung in den Zylinder abzuschalten und den oder die verbleibenden Zylinder weiterhin mit Kraftstoffeinspritzung unter Verwendung des Zündzeitpunkts zu betreiben. Dabei ist vorgesehen, dass den verbleibenden, weiterbetriebenen Zylindern der Brennkraftmaschine bei gleichem Betriebspunkt eine im Vergleich zu einer vor der Zylinderabschaltung vorliegenden Ausgangskraftstoffmenge größere Kraftstoffmenge zum Einstellen eines unterstöchiometrischen Kraftstoff-Sauerstoff-Verhältnisses zugeführt wird. Weiterhin ist vorgesehen, dass das Abgas der Brennkraftmaschine einer Abgasreinigungseinrichtung zugeführt wird, und dass eine Temperatur in der Abgasreinigungseinrichtung ermittelt wird, wobei bei Überschreiten eines Grenzwerts durch die Temperatur die Kraftstoffmenge in Richtung der Ausgangskraftstoffmenge verringert und/oder eine der Brennkraftmaschine zugeführte Frischgasmenge vergrößert und/oder der Zündzeitpunkt ausgehend von dem Schwellenzeitpunkt nach früh verstellt und/oder ein weiterer Zylinder abgeschaltet wird, und wobei wenigstens eine dieser Maßnahmen durchgeführt wird, ist die Temperatur in der Abgasreinigungseinrichtung dem Grenzwert entspricht oder kleiner ist als dieser. Es sei darauf hingewiesen, dass der Zündzeitpunkt während der Zylinderabschaltung dem Schwellenzündzeitpunkt entsprechen, jedoch auch früher als dieser liegen kann.

Auf die Vorteile einer derartigen Ausgestaltung der Antriebseinrichtung beziehungsweise einer derartigen Vorgehensweise wurde bereits hingewiesen. Sowohl die Antriebseinrichtung als auch das Verfahren zu ihrem Betreiben können gemäß den vorstehenden Ausführungen weitergebildet sein, sodass insoweit auf diese verwiesen wird.

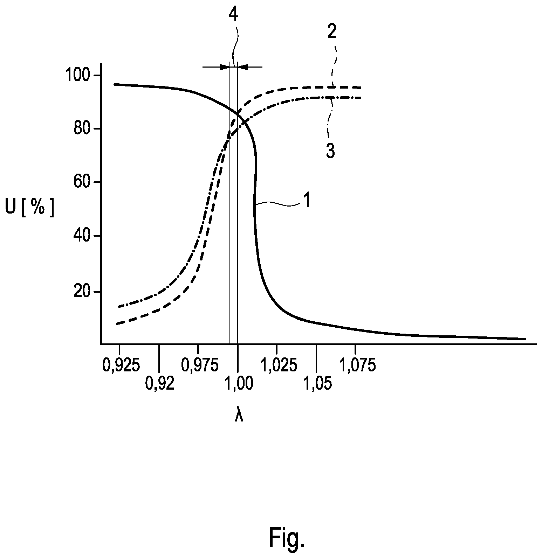

Die Erfindung wird nachfolgend anhand der in der Zeichnung dargestellten Ausführungsbeispiele näher erläutert, ohne dass eine Beschränkung der Erfindung erfolgt. Dabei zeigt die einzige
Figur ein Diagramm, in welchem Konvertierungsraten einer Abgasreinigungseinrichtung einer Antriebseinrichtung dargestellt sind.

Die Figur zeigt ein Diagramm, in welchem eine Konvertierungsrate beziehungsweise ein Umsatz U, welcher in Prozent angegeben ist, über dem Kraftstoff-Sauerstoff-Verhältnis λ aufgetragen ist. Bei λ = 1 liegt ein stöchiometrisches Kraftstoff-Sauerstoff-Verhältnis vor, bei λ < 1 ist ein fettes Verhältnis und bei Ä > 1 ein mageres Verhältnis vorliegend. Dargestellt ist durch einen Verlauf 1 der Umsatz U für Stickoxide, durch einen Verlauf 2 für Kohlenstoffoxid und durch einen Verlauf 3 für Kohlenwasserstoffe. Es ist erkennbar, dass innerhalb eines Lambdafensters 4 für alle drei Verläufe 1, 2 und 3 vergleichsweise hohe Umsätze erzielt werden.

Bei einem Verfahren zum Betreiben einer eine Brennkraftmaschine aufweisenden Antriebseinrichtung ist nun vorgesehen, dass zur Reduzierung eines von der Brennkraftmaschine bereitgestellten Antriebsdrehmoments ein an der Brennkraftmaschine eingestellter Zündzeitpunkt ausgehend von einem Ausgangszündzeitpunkt nach spät verstellt wird. Das Verstellen des Zündzeitpunkts erfolgt hierbei für alle Zylinder der Brennkraftmaschine. Durch das Verstellen des Zündzeitpunkts nach spät wird bereits eine Reduktion des Antriebsdrehmoments realisiert. Die übrigen Betriebsparameter der Brennkraftmaschine bleiben - bei gleichem Betriebspunkt - bevorzugt gleich. Insbesondere wird den Zylindern zunächst dieselbe Kraftstoffmenge und dieselbe Sauerstoffmenge zugeführt wie vor dem Verstellen des Zündzeitpunkts.

Durch das Verstellen des Zündzeitpunkts nach spät erhöht sich die Temperatur des von der Brennkraftmaschine erzeugten Abgases. Eine solche Erhöhung ist jedoch nur in gewissen Grenzen zulässig, sodass der Zündzeitpunkt nur bis zu einem Schwellenzündzeitpunkt verstellt werden soll. Der Schwellenzündzeitpunkt ist hierbei beispielsweise derjenige Zündzeitpunkt, bis zu welchem die Brennkraftmaschine zuverlässig ohne Zündaussetzer betrieben werden kann und/oder bis zu welchem die Temperatur des Abgases unterhalb einer bestimmten Grenztemperatur liegt. Zur weiteren Reduzierung des Antriebsdrehmoments wird nun in wenigstens einem abzuschaltenden Zylinder die Kraftstoffeinspritzung ausgesetzt, sodass der Zylinder oder die abzuschaltenden Zylinder schlussendlich abgeschaltet werden. Die verbleibenden Zylinder werden weiterhin betrieben und mit Kraftstoffeinspritzung unter Verwendung des Zündzeitpunkts betrieben, der dem Schwellenzündzeitpunkt entsprechen oder früher sein kann.

Aufgrund des Abschaltens des wenigstens einen Zylinders würde bei gleichbleibender Kraftstoffmenge für die weiterbetriebenen Zylinder in dem Abgas der Brennkraftmaschine ein starker Sauerstoffüberschuss auftreten. Aus diesem Grund soll den weiterbetriebenen Zylindern eine größere Kraftstoffmenge zugeführt werden, sodass in diesen ein unterstöchiometrisches Kraftstoff-Sauerstoff-Verhältnis, mithin also Luftmangel, vorliegt. Hierdurch werden zum einen die Stickoxidrohemissionen verringert, weil zum einen die Temperatur in dem Zylinder und zum anderen der Restsauerstoffgehalt hinter der Flammenfront gesenkt wird. Zum anderen wird die Konvertierungsrate für Stickoxide in einer der Brennkraftmaschine nachgeschalteten Abgasreinigungseinrichtung verbessert, insbesondere falls die Kraftstoffmenge für die weiterbetriebenen Zylinder derart gewählt wird, dass das insgesamt von der Brennkraftmaschine ausgestoßene Abgas eine stöchiometrische Zusammensetzung oder zumindest nahezu eine stöchiometrische Zusammensetzung aufweist. Hierunter ist zu verstehen, dass das Abgas dieselbe Zusammensetzung aufweist wie bei einem stöchiometrischen oder zumindest nahezu stöchiometrischen Betrieb der Brennkraftmaschine, insbesondere aller Zylinder der Brennkraftmaschine.

## Patentansprüche

1. Verfahren zum Betreiben einer Antriebseinrichtung, die eine Brennkraftmaschine mit mehreren Zylindern aufweist, wobei zur Reduzierung eines von der Brennkraftmaschine bereitgestellten Antriebsdrehmoments ein an der Brennkraftmaschine eingestellter Zündzeitpunkt ausgehend von einem Ausgangszündzeitpunkt nach spät verstellt wird, bis der Zündzeitpunkt einem Schwellenzündzeitpunkt entspricht, und zur weiteren Reduzierung des Antriebsdrehmoments wenigstens ein abzuschaltender Zylinder der mehreren Zylinder durch Aussetzung einer Kraftstoffeinspritzung in den Zylinder abgeschaltet wird und der oder die verbleibenden Zylinder weiterhin mit Kraftstoffeinspritzung unter Verwendung des Zündzeitpunkts betrieben wird/werden, wobei
den verbleibenden, weiterbetriebenen Zylindern der Brennkraftmaschine eine im Vergleich zu einer vor der Zylinderabschaltung vorliegenden Ausgangskraftstoffmenge größere Kraftstoffmenge zum Einstellen eines unterstöchiometrischen Kraftstoff-Sauerstoff-Verhältnisses zugeführt wird, **dadurch gekennzeichnet, dass** das Abgas der Brennkraftmaschine einer Abgasreinigungseinrichtung zugeführt wird, und dass eine Temperatur in der Abgasreinigungseinrichtung ermittelt wird, wobei bei Überschreiten eines Grenzwerts durch die Temperatur die Kraftstoffmenge in Richtung der Ausgangskraftstoffmenge verringert und/oder eine der Brennkraftmaschine zugeführte Frischgasmenge vergrößert und/oder der Zündzeitpunkt ausgehend von dem Schwellenzündzeitpunkt nach früh verstellt und/oder ein weiterer Zylinder abgeschaltet wird, und wobei wenigstens eine dieser Maßnahmen durchgeführt wird, bis die Temperatur in der Abgasreinigungseinrichtung dem Grenzwert entspricht oder kleiner ist als dieser.

2. Verfahren nach Anspruch 1, **dadurch gekennzeichnet, dass** den weiterbetriebenen Zylindern eine bezüglich einer vor der Zylinderabschaltung vorliegenden Ausgangssauerstoffmenge gleichbleibende Sauerstoffmenge zugeführt wird.

3. Verfahren nach einem der vorhergehenden Ansprüche, **dadurch gekennzeichnet, dass** während der Zylinderabschaltung Frischgas durch die abgeschalteten Zylinder gefördert und als Abgas abgeführt wird.

4. Verfahren nach einem der vorhergehenden Ansprüche, **dadurch gekennzeichnet, dass** Abgas der weiterbetriebenen Zylinder und der abgeschalteten Zylinder stromabwärts von Auslassventilen zusammengeführt wird, und dass die Kraftstoffmenge während der Zylinderabschaltung derart gewählt wird, dass das Abgas eine stöchiometrische Zusammensetzung aufweist, oder einer Maximalkraftstoffmenge entspricht.

5. Verfahren nach einem der vorhergehenden Ansprüche, **dadurch gekennzeichnet, dass** der Brennkraftmaschine in einem Anfettungszeitraum die größere Kraftstoffmenge zugeführt wird, wobei der Anfettungszeitraum vor der Zylinderabschaltung beginnt und/oder nach der Zylinderabschaltung endet.

6. Verfahren nach Anspruch 5, **dadurch gekennzeichnet, dass** der Anfettungszeitraum eingeleitet wird, wenn anhand wenigstens eines Betriebsparameters der Antriebseinrichtung eine Drehmomentänderung prognostiziert wird.

7. Verfahren nach Anspruch 6, **dadurch gekennzeichnet, dass** die Drehmomentänderung prognostiziert wird, wenn der Betriebspunkt sich einem Getriebeschaltpunkt nähert und/oder ein Reifenschlupf sich einer Schlupfgrenze nähert.

8. Verfahren nach einem der Ansprüche 5 bis 7, **dadurch gekennzeichnet, dass** der Anfettungszeitraum nach einem Beenden der Zylinderabschaltung beendet wird, sobald ein Sauerstofffüllstand eines Sauerstoffspeichers der Abgasreinigungseinrichtung einen Sollfüllstand erreicht hat.

9. Antriebseinrichtung, insbesondere zur Durchführung des Verfahrens nach einem oder mehreren der vorhergehenden Ansprüche, die eine Brennkraftmaschine mit mehreren Zylindern aufweist und dazu ausgebildet ist, zur Reduzierung eines von der Brennkraftmaschine bereitgestellten Antriebsdrehmoments einen an der Brennkraftmaschine eingestellten Zündwinkel ausgehend von einem Ausgangszündzeitpunkt nach spät zu verstellen, bis der Zündzeitpunkt einem Schwellenzündzeitpunkt entspricht, und zur weiteren Reduzierung des Antriebsdrehmoments wenigstens einen abzuschaltenden Zylinder der mehreren Zylinder durch Aussetzung einer Kraftstoffeinspritzung in den Zylinder abzuschalten und den oder die verbleibenden Zylinder weiterhin mit Kraftstoffeinspritzung unter Verwendung des Zündzeitpunkts zu betreiben, wobei den verbleibenden, weiterbetriebenen Zylindern der Brennkraftmaschine eine im Vergleich zu einer vor der Zylinderabschaltung vorliegende Ausgangskraftstoffmenge größere Kraftstoffmenge zum Einstellen eines unterstöchiometrischen Kraftstoff-Sauerstoff-Verhältnisses zugeführt wird, **dadurch gekennzeichnet, dass** das Abgas der Brennkraftmaschine einer Abgasreinigungseinrichtung zugeführt wird, und dass eine Temperatur in der Abgasreinigungseinrichtung ermittelt wird, wobei bei Überschreiten eines Grenzwerts durch die Temperatur die Kraftstoffmenge in Richtung der Ausgangskraftstoffmenge verringert und/oder eine der Brennkraftmaschine zugeführte Frischgasmenge vergrößert und/oder der Zündzeitpunkt ausgehend von dem Schwellenzündzeitpunkt nach früh verstellt und/oder ein weiterer Zylinder abgeschaltet wird, und wobei wenigstens eine dieser Maßnahmen durchgeführt wird, bis die Temperatur in der Abgasreinigungseinrichtung dem Grenzwert entspricht oder kleiner ist als dieser.

## Claims

1. Method for operating a drive apparatus, which comprises an internal combustion engine having a plurality of cylinders, wherein, in order to reduce a drive torque provided by the internal combustion engine, an ignition time set at the internal combustion engine is retarded, starting from an initial ignition time, until the ignition time corresponds to a threshold ignition time, and, in order to further reduce the drive torque, at least one cylinder to be shut off of the plurality of cylinders is shut off by suspending an injection of fuel into the cylinder and the remaining cylinder(s) continues/continue to be operated with fuel injection using the ignition time,
wherein
the remaining cylinders of the internal combustion engine that continue to operate are fed a greater quantity of fuel, in comparison to an initial quantity of fuel existing prior to shutting off the cylinder, in order to set a substoichiometric fuel-oxygen ratio, **characterised in that** the internal combustion engine exhaust gas is fed into an exhaust gas purification apparatus, and that a temperature is determined in the exhaust gas purification apparatus, wherein, when a limit is exceeded by the temperature, the quantity of fuel in the direction of the initial quantity of fuel is reduced and/or a quantity of fresh gas fed into the internal combustion engine is increased and/or the ignition time, starting from the threshold ignition time, is advanced and/or a further cylinder is shut off, and wherein at least one of these measures is implemented until the temperature in the exhaust gas purification apparatus corresponds to or is below the limit.

2. Method according to claim 1, **characterised in that** the cylinders that continue to operate are fed an unchanged quantity of oxygen relative to an initial quantity of oxygen existing prior to the cylinder shut-off.

3. Method according to any of the preceding claims, **characterised in that**, during cylinder shut-off, fresh gas is conveyed through the shut-off cylinder and discharged as exhaust gas.

4. Method according to any of the preceding claims, **characterised in that** exhaust gas from the cylinders that continue to operate and the shut-off cylinder is combined downstream of exhaust valves, and that the quantity of fuel during cylinder shut-off is selected such that the exhaust gas has a stoichiometric composition, or corresponds to a maximum quantity of fuel.

5. Method according to any of the preceding claims, **characterised in that** the internal combustion engine is fed a greater quantity of fuel during an enrichment period, wherein the enrichment period begins prior to cylinder shut-off and/or ends following cylinder shut-off.

6. Method according to claim 5, **characterised in that** the enrichment period is initiated when a torque change is predicted by means of at least one of the operating parameters of the drive apparatus.

7. Method according to claim 6, **characterised in that** the torque change is predicted when the operating point approaches a gear shift point and/or a tyre slip approaches a slip limit.

8. Method according to any of claims 5 to 7, **characterised in that** the enrichment period ends following the end of cylinder shut-off, as soon as an oxygen level of an oxygen storage tank of the exhaust gas purification apparatus has reached a target level.

9. Drive apparatus, in particular for implementing the method according to one or more of the preceding claims, which comprises an internal combustion engine having a plurality of cylinders and is designed, in order to reduce a drive torque provided by the internal combustion engine, to retard an ignition angle set at the internal combustion engine, starting from an initial ignition time, until the ignition time corresponds to a threshold ignition time, and, in order to further reduce the drive torque, to shut off at least one cylinder to be shut off of the plurality of cylinders by suspending an injection of fuel into the cylinder and to continue to operate the remaining cylinder(s) with fuel injection using the ignition time, wherein
the remaining cylinders of the internal combustion engine that continue to operate are fed a greater quantity of fuel, in comparison to an initial quantity of fuel existing prior to shutting off the cylinder, in order to set a substiochiometric fuel-oxygen ratio, **characterised in that** the internal combustion engine exhaust gas is fed into an exhaust gas purification apparatus, and that a temperature is determined in the exhaust gas purification apparatus, wherein, when a limit is exceeded by the temperature, the quantity of fuel in the direction of the initial quantity of fuel is reduced and/or a quantity of fresh gas fed into the internal combustion engine is increased and/or the ignition time, starting from the threshold ignition time, is advanced and/or a further cylinder is shut off, and wherein at least one of these measures is implemented until the temperature in the exhaust gas purification apparatus corresponds to or is below the limit.

## Revendications

1. Procédé de fonctionnement d'un dispositif d'entraînement qui présente un moteur à combustion interne avec plusieurs cylindres, dans lequel pour la réduction d'un couple d'entraînement fourni par le moteur à combustion interne un point d'allumage réglé au niveau du moteur à combustion interne est retardé à partir d'un point d'allumage initial jusqu'à ce que le point d'allumage corresponde à un point d'allumage seuil, et pour la suite de la réduction du couple d'entraînement au moins un cylindre à mettre hors circuit des plusieurs cylindres est mis hors circuit par interruption d'une injection de carburant dans le cylindre et le ou les cylindres restants est/sont actionnés en outre avec une injection de carburant en utilisant le point d'allumage, dans lequel
une quantité de carburant supérieure à une quantité de carburant initiale présente avant la mise hors service des cylindres est amenée aux cylindres continuant à fonctionner restants du moteur à combustion interne pour le réglage d'un rapport carburant-oxygène sous-stœchiométrique, **caractérisé en ce que** les gaz d'échappement du moteur à combustion interne sont amenés à un dispositif de nettoyage de gaz d'échappement, et qu'une température est déterminée dans le dispositif de nettoyage de gaz d'échappement, dans lequel en cas de dépassement d'une valeur limite par la température la quantité de carburant est réduite en direction de la quantité de carburant initiale et/ou une quantité de gaz frais amenée au moteur à combustion interne est augmentée et/ou le point d'allumage est avancé à partir du point d'allumage seuil et/ou un autre cylindre est mis hors service, et dans lequel au moins une de ces mesures est réalisée jusqu'à ce que la température dans le dispositif de nettoyage de gaz d'échappement corresponde à la valeur limite ou soit inférieure à celle-ci.

2. Procédé selon la revendication 1, **caractérisé en ce qu'**une quantité d'oxygène constante par rapport à une quantité d'oxygène initiale présente avant la mise hors circuit des cylindres est amenée aux cylindres continuant à fonctionner.

3. Procédé selon l'une des revendications précédentes, **caractérisé en ce que** pendant la mise hors circuit des cylindres du gaz frais est transporté par les cylindres mis hors circuit et est évacué comme gaz d'échappement.

4. Procédé selon l'une des revendications précédentes, **caractérisé en ce que** des gaz d'échappement des cylindres continuant à fonctionner et des cylindres mis hors circuits sont réunis en aval des soupapes de sortie, et que la quantité de carburant est choisie pendant la mise hors circuit des cylindres telle manière que les gaz d'échappement présentent une composition stœchiométrique, ou correspondent à une quantité de carburant maximale.

5. Procédé selon l'une des revendications précédentes, **caractérisé en ce que** la quantité de carburant la plus grande est amenée au moteur à combustion interne dans une période de graissage, dans lequel la période de graissage commence avant la mise hors circuit des cylindres et/ou se termine après la mise hors circuit des cylindres.

6. Procédé selon la revendication 5, **caractérisé en ce que** la période de graissage est introduite lorsqu'une modification de couple est pronostiquée au moyen d'au moins un paramètre de fonctionnement du dispositif d'entraînement.

7. Procédé selon la revendication 6, **caractérisé en ce que** la modification de couple est pronostiquée lorsque le point de fonctionnement s'approche d'un point de commutation de transmission et/ou un patinage de pneu s'approche d'une limite de patinage.

8. Procédé selon l'une des revendications 5 à 7, **caractérisé en ce que** la période de graissage est terminée après une fin de la mise hors circuit des cylindres dès qu'un niveau de remplissage d'oxygène d'un accumulateur d'oxygène du dispositif de nettoyage de gaz d'échappement a atteint un niveau de remplissage de consigne.

9. Dispositif d'entraînement, en particulier pour la réalisation du procédé selon l'une ou plusieurs des revendications précédentes, qui présente un moteur à combustion interne avec plusieurs cylindres et est réalisé afin de retarder pour la réduction d'un couple d'entraînement fourni par le moteur à combustion interne un angle d'allumage réglé au niveau du moteur à combustion interne à partir d'un point d'allumage initial jusqu'à ce que le point d'allumage corresponde à un point d'allumage seuil, et pour la suite de la réduction du couple d'entraînement mettre hors circuit au moins un cylindre à mettre hors circuit des plusieurs cylindres par interruption d'une injection de carburant dans le cylindre et faire fonctionner le ou les cylindres restants en outre avec une injection de carburant en utilisant le point d'allumage, dans lequel une quantité de carburant supérieure par rapport à une quantité de carburant initiale présente avant la mise hors circuit des cylindres est amenée aux cylindres continuant à fonctionner restants du moteur à combustion interne pour le réglage d'un rapport carburant-oxygène sous-stœchiométrique, **caractérisé en ce que** les gaz d'échappement du moteur à combustion interne sont amenés à un dispositif de nettoyage de gaz d'échappement, et qu'une température est déterminée dans le dispositif de nettoyage de gaz d'échappement, dans lequel en cas de dépassement d'une valeur limite par la température la quantité de carburant est réduite en direction de la quantité de carburant initiale et/ou une quantité de gaz frais amenée au moteur à combustion interne est augmentée et/ou le point d'allumage est avancé à partir du point d'allumage seuil et/ou un autre cylindre est mis hors service, et dans lequel au moins une de ces mesures est réalisée jusqu'à ce que la température dans le dispositif de nettoyage de gaz d'échappement corresponde à la valeur limite ou soit inférieure à celle-ci.
